# EUROPÄISCHE PATENTSCHRIFT

(11) **EP 3 190 018 B1**
(45) Veröffentlichungstag und Bekanntmachung des Hinweises auf die Patenterteilung: **17.01.2018**
(21) Anmeldenummer: 17150580.3
(22) Anmeldetag: 06.01.2017
(51) Int. Cl.: B60T 13/66, B60T 17/22, B60T 8/17

(54) **SICHERHEITSSTEUERUNG FÜR EINE DRUCKLUFTBREMSE MIT GLEITSCHUTZSTEUERUNG**
SAFETY CONTROL FOR A COMPRESSED AIR BRAKE WITH ANTISKID CONTROL
COMMANDE DE SÉCURITÉ POUR UN FREIN À AIR COMPRIMÉ COMPRENANT UNE COMMANDE DE SYSTÈME ANTIDÉRAPANT

(30) Priorität: 07.01.2016 DE 102016200114
(43) Veröffentlichungstag der Anmeldung: 12.07.2017
(73) Patentinhaber: KES Keschwari Electronic Systems GmbH & Co. KG, 30890 Barsinghausen (DE)
(72) Erfinder: Keschwari Rasti, Mahmud, 30890 Barsinghausen (DE)
(74) Vertreter: Taruttis, Stefan Georg

(56) Entgegenhaltungen:
- DE-A1- 4 137 546
- DE-A1-102012 014 885
- DE-C1- 19 512 804

## Beschreibung

Die vorliegende Erfindung betrifft eine Sicherheitssteuerung für eine Druckluftbremse, die eine Gleitschutzsteuerung aufweist, auch als Antiblockiersystem bezeichnet, insbesondere für Schienenfahrzeuge, sowie ein Verfahren zur Steuerung der Druckluftbremse mit Sicherheitssteuerung. Die Erfindung betrifft Druckluftbremsen, die in der Bremsdruckleitung, die durch ein Steuerventil gesteuert mit Druckluft beaufschlagt wird und mit einem Bremszylinder verbunden ist, ein Gleitschutzventil aufweisen, das einerseits die Bremsdruckleitung verschließen bzw. vom Bremszylinder trennen kann, und andererseits den Bremszylinder mit einem Auslass verbinden kann, z.B. über einen Abschnitt der Bremsdruckleitung, um den Bremsdruck aus dem Bremszylinder zu entspannen.

Das Gleitschutzventil ist z.B. durch eine Gleitschutzsteuerung so gesteuert, dass Bremsdruck, mit dem die Bremsdruckleitung bis in den Bremszylinder durch das Steuerventil beaufschlagt wird, durch den Auslass aus dem Bremszylinder abgelassen wird, wenn in der Gleitschutzsteuerung Signale vorliegen, die ein Blockieren des gebremsten Rads anzeigen. Generell kann das Gleitschutzventil ein Dreiwegeventil oder zwei einfache Ventile aufweisen, die jeweils nur einen Eingang und einen Ausgang haben.

### Stand der Technik

Die DE102012014885 A1 beschreibt eine Bremssteuerung, bei der das Bremssteuersignal und das Gleitschutzsignal bzw. dessen Dauer als Parameter genutzt werden, nach denen der im Bremszylinder anliegende Druck eingestellt wird bzw. das Gleitschutzsignal unterbrochen werden kann.

Die DE19512804 C1 beschreibt eine blockiergeschützte hydraulische Bremse mit einer elektronischen Steuerung in einem Gehäuse, in dem auch ein Pumpenmotor enthalten ist, der mit der elektronischen Steuerung verbunden ist.

Die DE4137546 A1 beschreibt einen Mikroprozessor zum Bestimmen der tatsächlichen Fahrzeuggeschwindigkeit eines Schienenfahrzeugs, bei der auch der im Bremszylinder gemessene Druck, ein momentaner Haftreibungsbeiwert zwischen Rad und Schiene bei einer kritischen Verzögerung der Radachse bestimmt wird und zur Korrektur der Fahrzeuggeschwindigkeit herangezogen wird.

Die DE 10344540 B4 beschreibt eine gattungsgemäße, durch Druckluft angetriebene Bremse für Schienenfahrzeuge, bei der zum Verhindern des Blockierens abhängig von der Radgeschwindigkeit der beim Bremsen am Bremszylinder anliegende Bremsdruck durch ein Auslassventil abgesenkt wird, das in der Druckluftleitung zum Bremszylinder angeordnet ist. Das Auslassventil ist durch eine Gleitschutzsteuerung gesteuert, die Signale für die tatsächliche Radgeschwindigkeit von Impulsgebern erhält, um den am Bremszylinder anliegenden Bremsdruck abzusenken, wenn die tatsächliche Radgeschwindigkeit unter der für die Zuggeschwindigkeit proportionalen berechneten Radgeschwindigkeit liegt, um ein Blockieren des Rads zu vermeiden bzw. aufzuheben.

Die Bremse der DE 10344540 B4 hat den Nachteil, dass bei einem Defekt der Gleitschutzsteuerung das Ablassventil möglicherweise in Offenstellung bleibt und eine Bremsung verhindert, wenn am Bremszylinder Bremsdruck anliegen sollte.

### Aufgabe der Erfindung

Der Erfindung stellt sich die Aufgabe, eine Schaltung bereitzustellen, mit der bei einer Fehlfunktion der Gleitschutzsteuerung eine wirksame Bremssteuerung ermöglicht wird. Die Schaltung soll insbesondere bei Fehlfunktion einer Gleitschutzsteuerung, die bei normaler Funktion ein Blockieren von Rädern beim Bremsen durch Ablassen von Bremsdruck aus dem Bremszylinder verhindert, die Bremse funktionsfähig machen.

### Beschreibung der Erfindung

Die Erfindung löst die Aufgabe mit den Merkmalen der Ansprüche, insbesondere mit einer elektronischen Sicherheitssteuerung für eine Druckluftbremse für Schienenfahrzeuge, die ein Gleitschutzventil aufweist, das zum Verhindern des Blockierens der Räder bei anliegendem Bremsdruck von einer Gleitschutzsteuerung gesteuert ist. Bevorzugt ist das Gleitschutzventil generell eingerichtet und durch die Gleitschutzsteuerung gesteuert, die Bremsdruckleitung zu schließen, so dass der Bremszylinder nicht weiter mit Bremsdruck beaufschlagt wird, und einen Auslass zu öffnen, um den im Bremszylinder vorhandenen Druck entweichen zu lassen, um eine Blockierung des Rads zu beenden oder zu verhindern, und bei fortgesetzt geöffnetem Steuer- oder Bremsventil die weitere Bremsung durch Öffnen der Bremsdruckleitung und Schließen des Auslasses zuzulassen.

Die Sicherheitssteuerung weist Signaleingänge für die Steuersignale auf, die von einer Gleitschutzsteuerung zum Steuern eines Gleitschutzventils erzeugt werden. Die Steuersignale werden erfindungsgemäß bevorzugt durch eine Steuersignalleitung von der Gleitschutzsteuerung an das Gleitschutzventil übermittelt, wobei die Sicherheitssteuerung Steuersignaleingänge für die Steuersignale aufweist, z.B. einen Anschluss für die Steuersignalleitung. Die Sicherheitssteuerung kann Anschlüsse für die Steuersignale aufweisen, an die das Gleitschutzventil angeschlossen ist. Z.B. kann die Sicherheitssteuerung die Steuersignale der Steuersignalleitung an das Gleitschutzventil weiterleiten oder die Steuersignale über eine Abzweigleitung aufnehmen. Die Sicherheitssteuerung zeichnet sich durch zumindest einen Unterbrecher aus, der an der Steuersignalleitung angeordnet und eingerichtet ist, die Steuersignalleitung zum Gleitschutzventil zu unterbrechen, wenn die Sicherheitssteuerung ein nicht vorgesehenes Steuersignal aufnimmt, das von der Gleitschutzsteuerung erzeugt wurde.

Durch die Unterbrechung der Steuersignalleitung durch die Sicherheitssteuerung wird die Steuerung des Gleitschutzventils durch die Gleitschutzsteuerung unterbrochen und das Gleitschutzventil wird in einen Schaltzustand gesteuert, in dem die Bremsdruckleitung von einem Steuer- oder Bremsventil durchgehend mit dem Bremszylinder verbunden ist und ein Auslass an der Bremsdruckleitung geschlossen ist. In diesem Schaltzustand kann der Bremsdruck, der von einem Steuer- oder Bremsventil in die Bremsdruckleitung gelassen wird, ohne Beeinflussung durch das Gleitschutzventil auf den Bremszylinder wirken und die Bremsung antreiben. Durch die Unterbrechung der Steuersignalleitung wird ein nicht vorgesehenes Steuersignal der Gleitschutzsteuerung nicht an das Gleitschutzventil geleitet, so dass die Bremse funktionsfähig ist und Bremsdruck auf den Bremszylinder wirkt. Bevorzugt wird die Steuersignalleitung in diesem Schaltzustand durch den Unterbrecher stromlos geschaltet und das Gleitschutzventil ist eingerichtet, im stromlosen Zustand die Bremsdruckleitung durchgehend vom Steuer- oder Bremsventil mit dem Bremszylinder zu verbinden und einen Auslass, der mit der Bremsdruckleitung verbunden ist, zu schließen.

Ein nicht vorgesehenes Steuersignal ist generell eines, das nicht wie vorgesehen bei anliegendem Bremsdruck das Blockieren des Rads verhindert und im nicht blockierten Zustand des Rads den vom Steuer- oder Bremsventil auf die Bremsdruckleitung aufgegebenen Bremsdruck durch das Gleitschutzventil auf den Bremszylinder leitet und den Auslass schließt. Ein nicht vorgesehenes Steuersignal ist z.B. eines, das bei Fehlfunktion der Gleitschutzsteuerung erzeugt wird, z.B. ein Öffnen des Auslasses und/oder ein Schließen der Bremsdruckleitung für eine längere Zeit, als in der Gleitschutzsteuerung vorgegeben ist, insbesondere ein dauerhaftes Öffnen des Auslasses und/oder ein dauerhaftes Schließen der Bremsdruckleitung. Die Sicherheitssteuerung kann z.B. einen elektronischen Speicher aufweisen, in dem die maximalen Zeiten gespeichert sind, für die die Gleitschutzsteuerung das Gleitschutzventil ansteuert, die Bremsdruckleitung zu unterbrechen bzw. zu sperren und/oder den Auslass zu öffnen. Die Sicherheitssteuerung ist dabei auch eingerichtet, die Zeiten zu bestimmen, für die ein Steuersignal von der Gleitschutzsteuerung erzeugt wird, um das Gleitschutzventil die Bremsdruckleitung unterbrechen bzw. sperren zu lassen und/oder den Auslass öffnen zu lassen, und ist eingerichtet, die für das Steuersignal bestimmten Zeiten mit den maximalen Zeiten zu vergleichen, die in seinem elektronischen Speicher gespeichert sind. Ein nicht vorgesehenes Steuersignal ist z.B. eines, das von der Gleitschutzsteuerung für die Unterbrechung der Bremsdruckleitung und/oder Öffnung des Auslasses für eine längere Zeit erzeugt wird, als die gespeicherte maximale Zeit dafür beträgt.

Bevorzugt ist die Sicherheitssteuerung dabei eingerichtet, den Unterbrecher anzusteuern, um die Steuersignalleitung zu unterbrechen, wenn durch das Steuerventil Bremsdruck auf die Bremsdruckleitung aufgegeben wird. Alternativ oder zusätzlich zu einem elektronischen Speicher und einer Einrichtung zum Vergleichen gespeicherter maximaler Zeiten mit den für ein Steuersignal aufgenommenen Zeiten, für die das Gleitschutzventil angesteuert wird, um die Bremsdruckleitung zu unterbrechen bzw. sperren und/oder den Auslass zu öffnen, kann die Sicherheitssteuerung einen Signaleingang für ein Messsignal aufweisen, das den Bremsdruck in der Bremsdruckleitung anzeigt und/oder einen Signaleingang für ein Messsignal, das den Druck im Bremszylinder (Bremszylinderdruck) anzeigt. In dieser Ausführung hat die Sicherheitssteuerung den Vorteil, dass sie keine Signalleitung von sich zur Gleitschutzsteuerung aufweist, die zusätzlich zur Steuersignalleitung ist.

Wenn die Sicherheitssteuerung Steuersignale aufnimmt, die vorgesehen sind, kann die Sicherheitssteuerung den Unterbrecher ansteuern, die Steuersignalleitung wieder herzustellen, bzw. die Unterbrechung zu beenden, so dass das Gleitschutzventil wieder unter die Steuerung durch die Gleitschutzsteuerung kommt.

Bevorzugt ist die Sicherheitssteuerung an einem Gleitschutzventil angeordnet, das in der Bremsdruckleitung angeordnet ist und bei dem ein Drucksensor an seinem ersten Anschluss angeordnet ist, um ein Messsignal für den Druck in dem daran angeschlossenen Abschnitt der Bremsdruckleitung zu erzeugen, der das Steuer- oder Bremsventil mit dem Gleitschutzventil verbindet. Alternativ oder zusätzlich zu diesem Drucksensor für den Druck in der Bremsdruckleitung am ersten Anschluss des Gleitschutzventils kann das Gleitschutzventil optional einen Drucksensor an seinem dem ersten Anschluss gegenüberliegenden zweiten Anschluss aufweisen, um ein Messsignal für den Druck in dem daran angeschlossenen Abschnitt der Bremsdruckleitung zu erzeugen, der das Gleitschutzventil mit dem Bremszylinder verbindet. In dieser Ausführung ist die Sicherheitssteuerung insbesondere eingerichtet, bei einem Messsignal für den durch das Steuerventil anliegenden Bremsdruck und/oder bei einem Messsignal für die Drucklosigkeit des Bremszylinders den Unterbrecher anzusteuern, die Steuersignalleitung zu unterbrechen. In dieser Ausführung hat die Sicherheitssteuerung den Vorteil, dass sie keine zusätzliche Signalleitung von sich zur Gleitschutzsteuerung aufweist.

Zusätzlich kann die Sicherheitssteuerung einen Signaleingang für ein Signal aufweisen, das die Betätigung der Bremse anzeigt, z.B. für ein Steuersignal, das das Steuer- bzw. Bremsventil steuert. In dieser Ausführungsform ist die Sicherheitssteuerung eingerichtet, den Unterbrecher zur Unterbrechung der Steuersignalleitung anzusteuern, wenn das Steuersignal für das Steuer- bzw. Bremsventil das Beaufschlagen der Bremsdruckleitung mit Bremsdruck anzeigt und das Gleitschutzventil für eine längere Zeit als vorgesehen von der Gleitschutzsteuerung angesteuert wird, um die Bremsdruckleitung zu unterbrechen bzw. sperren und/oder den Auslass zu öffnen, und/oder wenn das von einem Drucksensor aufgenommene Signal für den Druck im Bremszylinder für längere Zeit als vorgesehen einen Druck anzeigt, der signifikant unterhalb des Bremsdrucks liegt, der vom Steuer- bzw. Bremsventil auf die Bremsdruckleitung gegeben wird. Ein signifikant unterhalb des Bremsdrucks liegender Druck im Bremszylinder ist z.B. einer, der eine kritische Druckabweichung aufweist, z.B. eine Druckabweichung von zumindest 10%, zumindest 20%, zumindest 30%, zumindest 40%, zumindest 50%, zumindest 60%, zumindest 70%, zumindest 80%, zumindest 90%, oder z.B. bis 100% entsprechend der Drucklosigkeit.

Bevorzugt ist die Gleitschutzsteuerung eingerichtet, das Gleitschutzventil bei anliegendem Bremsdruck abhängig von der Umdrehungsgeschwindigkeit des Rads bzw. der Radachse zu steuern, auf die der Bremszylinder wirkt.

Die Sicherheitssteuerung ist bevorzugt in einem Gehäuse angeordnet, das als Steuersignaleingänge einen Anschluss für die Steuersignalleitung aufweist, die mit der Gleitschutzsteuerung verbunden ist, und Ausgänge, die mit dem Gleitschutzventil zu verbinden sind, so dass die Sicherheitssteuerung in dem Gehäuse zwischen die Steuersignalleitung und das Gleitschutzventil geschaltet werden kann. Dabei kann das Gehäuse einen Eingang für ein Messsignal des Bremsdrucks und/oder einen Eingang für ein Messsignal des Bremszylinderdrucks aufweisen. Bevorzugt kann die Sicherheitssteuerung in ihrem Gehäuse unmittelbar an einem Gehäuse angebracht sein, in dem das Gleitschutzventil angeordnet ist. Weiter bevorzugt kann die Sicherheitssteuerung mit dem Gleitschutzventil in einem gemeinsamen Gehäuse angeordnet sein.

Die Erfindung wird nun mit Bezug auf die Figuren beschrieben, die schematisch in
- Figur 1 eine Bremse mit Gleitschutzsteuerung und Sicherheitssteuerung und
- Figur 2 eine Sicherheitssteuerung zeigen.

In den Figuren bezeichnen gleiche Bezugsziffern funktionsgleiche Elemente.

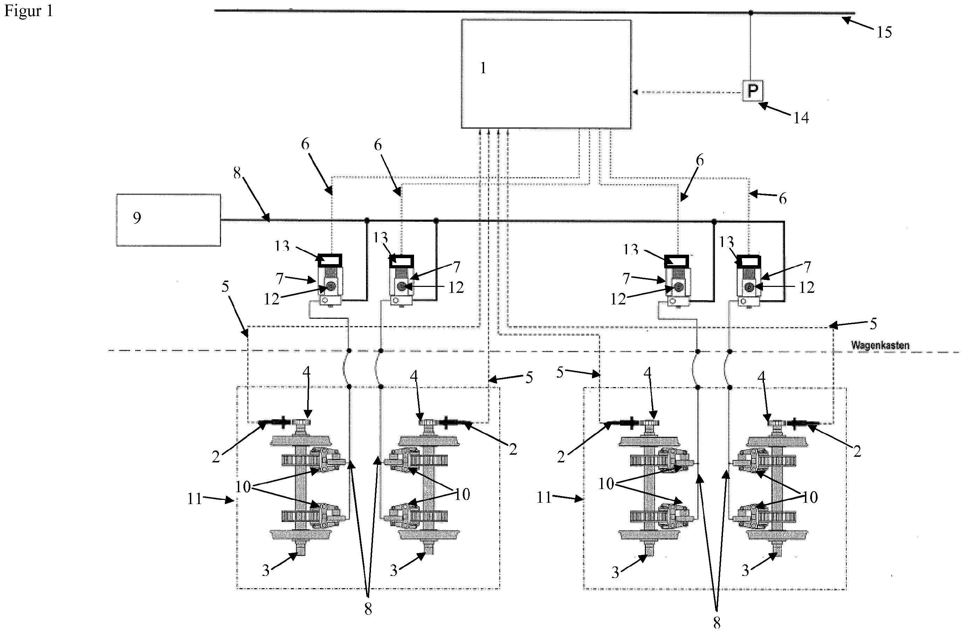

Figur 1 zeigt eine Gleitschutzsteuerung 1 in Form einer elektronischen Schaltung, die mit Geschwindigkeitssensoren 2 für die Radgeschwindigkeit verbunden sind. Die Geschwindigkeitssensoren 2 können z.B. berührungsfreie Sensoren sein, die auf an Radachsen 3 angeordnete Polräder 4 gerichtet sind. Die Signale der Geschwindigkeitssensoren 2 werden durch Signalleitungen 5 an die Gleitschutzsteuerung 1 übermittelt. Die Gleitschutzsteuerung 1 steuert über Steuersignalleitungen 6 Gleitschutzventile 7, die in der Bremsdruckleitung 8 zwischen einem Steuer- bzw. Bremsventil 9 und dem Bremszylinder, der Bestandteil einer Bremse 10 ist, angeordnet sind. Die Bremsdruckleitung 8 leitet den vom Steuer- bzw. Bremsventil 9 aufgegebenen Bremsdruck an den Bremszylinder der Bremse 10. Vorliegend sind die Bremsen 10 an jeweils zwei Radachsen 3 zweier Drehgestelle 11 gezeigt.

Das Gleitschutzventil 7 wird von der Gleitschutzsteuerung 1 mit vorgesehenen Steuersignalen z.B. so gesteuert, dass bei Bewegung des Schienenfahrzeugs bei anliegendem Bremsdruck, der durch das Steuer- bzw. Bremsventil 9 auf die Bremsdruckleitung 8 gegeben wird, in einem ersten Schaltzustand die Bremsdruckleitung 8 bis zum Bremszylinder der Bremse 10 durchgängig ist und ein Auslass 12 verschlossen ist und in einem zweiten Schaltzustand, in den das Gleitschutzventil 7 bei oder vor dem Blockieren eines Rads gesteuert wird, die Bremsdruckleitung 8 gesperrt bzw. vom Bremszylinder der Bremse 10 getrennt wird und ein Auslass 12 geöffnet wird, durch den Bremsdruck aus dem Abschnitt der Bremsdruckleitung 8 austritt, der das Gleitschutzventil 7 mit dem Bremszylinder der Bremse 10 verbindet.

Bei einer Störung der Gleitschutzsteuerung 1 wird das Gleitschutzventil 7 von der Gleitschutzsteuerung 1 mit nicht vorgesehenen Steuersignalen gesteuert, die eine wirksame Bremsung bei anliegendem Bremsdruck verhindern. Nicht vorgesehene Steuersignale sind z.B. solche, die das Gleitschutzventil 7 so steuern, dass der Auslass 12 länger als vorgesehen geöffnet ist und/oder die Bremsdruckleitung 8 länger als vorgesehen gesperrt wird, wenn das Steuerventil 9 die Bremsdruckleitung 8 mit Bremsdruck beaufschlagt. Solche nicht vorgesehenen Steuersignale können eine wirksame Betätigung der Bremse 10 verhindern.

Die erfindungsgemäße Sicherheitssteuerung 13 ist eingerichtet, nicht vorgesehene Steuersignale der Gleitschutzsteuerung 1 zu erkennen und ist mittels eines Eingangs für die Steuersignale mit der Steuersignalleitung 6 verbunden. Der Eingang kann z.B. ein elektrischer Anschluss für die Steuersignalleitung 6 sein.

Entsprechend einer bevorzugten Ausführungsform ist die Sicherheitssteuerung 13 in einem Gehäuse angeordnet, das an dem Gehäuse eines Gleitschutzventils 7 angebracht ist, oder in einem gemeinsamen Gehäuse mit dem Gleitschutzventil 7.

Generell kann die Gleitschutzsteuerung 1 mit einem Druckschalter 14 zur Übermittlung eines Signals für den Druck in der Hauptluftleitung 15 eines Schienenfahrzeugs verbunden sein.

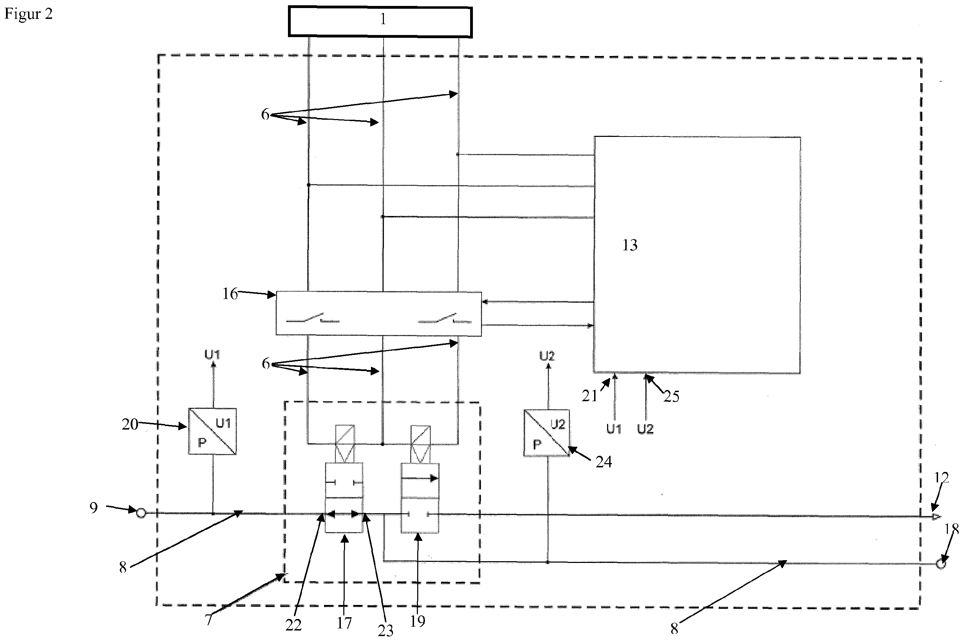

Die Figur 2 zeigt eine erfindungsgemäße Sicherheitssteuerung 13, die mit den Leitern einer Steuersignalleitung 6 verbunden ist. Die Sicherheitssteuerung 13 ist zur Auswertung von Steuersignalen eingerichtet und weist einen Unterbrecher 16 auf, der gesteuert ist, bei Feststellen von nicht vorgesehenen Steuersignalen die Steuersignalleitung 6 zum Gleitschutzventil 7 zu unterbrechen. In Figur 2 ist der Schaltzustand gezeigt, in dem der Unterbrecher 16 die Steuersignalleitung unterbricht, so dass das daran angeschlossene Gleitschutzventil 7 von der Gleitschutzsteuerung 1 elektrisch getrennt ist und stromlos geschaltet ist. Das Gleitschutzventil 7 weist in der hier gezeigten Ausführungsform zwei einfache Ventile auf, nämlich ein erstes Ventil 17, das in der Bremsdruckleitung 8 zwischen dem Steuer- bzw. Bremsventil 9 und dem Bremszylinder 18 einer Bremse 10 angeordnet ist und die Bremsdruckleitung 8 in der gezeigten Schaltstellung durchgängig macht und in der alternativen Schaltstellung die Bremsdruckleitung 8 sperrt und so den Bremszylinder 18 vom Steuer- bzw. Bremsventil 9 trennt. Ein an der Bremsdruckleitung 8 angeschlossenes zweites Ventil 19 ist mit dem Auslass 12 verbunden, um in einem ersten Schaltzustand, in dem das erste Ventil 17 geöffnet ist und die Bremsdruckleitung 8 vom Steuer- bzw. Bremsventil 9 zum Bremszylinder 18 durchgängig ist, den Auslass 12 zu schließen. In einem zweiten Schaltzustand, in dem das erste Ventil 17 den Bremszylinder 18 von dem Steuer- bzw. Bremsventil 9 trennt, verbindet das zweite Ventil 19 den Bremszylinder 18 mit dem Auslass 12, um den Bremsdruck abzulassen. Das Gleitschutzventil 7 wird von der Gleitschutzsteuerung 1 in den zweiten Schaltzustand gesteuert, um ein Blockieren des Rads beim Bremsen zu verhindern oder diesem vorzubeugen.

Generell ist das Gleitschutzventil bevorzugt eingerichtet, dass das zweite Ventil 19 in Geschlossenstellung ist, wenn das erste Ventil 17 in Offenstellung ist und das zweite Ventil 19 in Offenstellung ist, wenn das erste Ventil 17 in Geschlossenstellung ist.

Entsprechend der bevorzugten Ausführungsform zeigt die Figur 2 einen ersten Drucksensor 20, der den Druck in der Bremsdruckleitung 8 zwischen dem Steuer- bzw. Bremsventil 9 und dem Gleitschutzventil 7, insbesondere dem Anschluss des ersten Ventils 17 misst und sein Messsignal U1 an einen ersten Signaleingang 21 der Sicherheitssteuerung 13 übermittelt.

Insbesondere in der Ausführung des Gleitschutzventils 7 als ein einfaches erstes Ventil 17 in der Bremsdruckleitung 8 und ein einfaches zweites Ventil 19, das zwischen der Bremsdruckleitung 8 und dem Auslass 12 angeordnet ist, ist das Steuer- bzw. Bremsventil 9 mittels der Bremsdruckleitung 8 mit dem ersten Anschluss 22 des Gleitschutzventils 7 und insbesondere dessen ersten Ventils 17 verbunden und der dem ersten Anschluss 22 gegenüberliegende zweite Anschluss 23 mit dem Bremszylinder 18. Entsprechend ist ein erster Drucksensor 20 z.B. angeordnet, den Druck am ersten Anschluss 22 zu messen und dafür ein Messsignal U1 zu erzeugen.

Die Figur 2 zeigt auch den bevorzugten zweiten Drucksensor 24, der am zweiten Anschluss 23 des Gleitschutzventils 7 und insbesondere dessen ersten Ventils 17 angeschlossen ist und ein Messsignal U2 für den Druck erzeugt, der im Bremszylinder 18 anliegt. Der zweite Drucksensor 24 kann an dem Abschnitt der Bremsdruckleitung 8 angeschlossen sein, der das Gleitschutzventil 7 mit dem Bremszylinder 12 verbindet. Die Sicherheitssteuerung 13 weist entsprechend bevorzugt einen zweiten Signaleingang 25 für das Messsignal U2 des zweiten Drucksensors 24 auf.

Die Sicherheitssteuerung 13 kann eingerichtet sein, den Unterbrecher 16 zur Unterbrechung der Steuersignalleitung 6 anzusteuern, wenn als nicht vorgesehenes Steuersignal ein Bremsdruck durch den ersten Drucksensor 20 bestimmt wird und durch den zweiten Drucksensor 24 ein signifikant niedrigerer Druck für eine Zeitdauer bestimmt wird, die signifikant länger ist als eine vorbestimmte Zeitdauer. Dabei kann die vorbestimmte Zeitdauer die Zeitdauer sein, die in der Gleitschutzsteuerung 1 für die Offenstellung des Gleitschutzventils 7, insbesondere von dessen zweitem Ventil 19 vorgesehen ist, in der der Bremszylinder 18 mit dem Auslass 12 verbunden ist. Ein signifikant niedrigerer Druck z.B. einer, der eine kritische Druckabweichung aufweist, z.B. eine Druckabweichung von zumindest 10%, zumindest 20%, zumindest 30%, zumindest 40%, zumindest 50%, zumindest 60%, zumindest 70%, zumindest 80%, zumindest 90%, oder z.B. bis 100% entsprechend der Drucklosigkeit.

Generell kann ein nicht vorgesehenes Steuersignal darin bestehen, dass bei an der Bremsdruckleitung 9 durch das Steuer- bzw. Bremsventil 9 anliegendem Bremsdruck und/oder einem Steuersignal für das Öffnen Auslasses 12 und/oder ein Schließen der Bremsdruckleitung 8 für eine längere Zeit, als in der Gleitschutzsteuerung 1 vorgegeben ist, insbesondere ein dauerhaftes Öffnen des Auslasses 12 und/oder ein dauerhaftes Schließen der Bremsdruckleitung 8 zwischen Steuerventil 9 und Bremszylinder 18.

Das Öffnen des Auslasses 12 kann als Druck bestimmt sein, der durch den zweiten Drucksensor 24 gemessen wird und der signifikant unter dem am ersten Drucksensor 20 gemessenen Druck liegt, insbesondere wenn dieser Zustand für eine länger als vorbestimmte Zeitdauer bestimmt wird.

Die vorbestimmte Zeitdauer kann in einem elektronischen Speicher der Sicherheitssteuerung 13 gespeichert sein, die eingerichtet ist, die Zeitdauer des gemessenen Zustands bzw. Signals mit der vorbestimmten Zeitdauer zu vergleichen. Die vorbestimmte Zeitdauer kann z.B. der vorbestimmten Zeitdauer entsprechen, die in der Gleitschutzsteuerung für das Steuern des Gleitschutzventils in eine Stellung zum Verbinden des Bremszylinders mit dem Auslass 12 hinterlegt ist und alternativ oder zusätzlich kann die vorbestimmte Zeitdauer eine vorgegebene maximale Zeitdauer sein.

### Bezugszeichenliste

1 Gleitschutzsteuerung
2 Geschwindigkeitssensoren
3 Radachsen
4 Polrad
5 Signalleitung
6 Steuersignalleitung
7 Gleitschutzventil
8 Bremsdruckleitung
9 Steuer- oder Bremsventil
10 Bremse
11 Drehgestell
12 Auslass
13 Sicherheitssteuerung
14 Druckschalter
15 Hauptluftleitung
16 Unterbrecher
17 erstes Ventil
18 Bremszylinder
19 zweites Ventil
20 erster Drucksensor
21 erster Signaleingang
22 erster Anschluss
23 zweiter Anschluss
24 zweiter Drucksensor
25 zweiter Signaleingang
U1 Messsignal am ersten Anschluss
U2 Messsignal am zweiten Anschluss

## Patentansprüche

1. Sicherheitssteuerung (13) für eine gesteuerte Druckluftbremse, insbesondere für Schienenfahrzeuge, mit Steuersignaleingängen für Steuersignale, die durch eine Steuersignalleitung (6) von einer Gleitschutzsteuerung (1) an ein in einer Bremsdruckleitung (8) angeordnetes Gleitschutzventil (7) geleitet werden, und mit zumindest einem Unterbrecher (16), der an der Steuersignalleitung (6) angeordnet ist, wobei die Sicherheitssteuerung (13) eingerichtet ist, die Steuersignale auszuwerten und bei nicht vorgesehenen Steuersignalen den Unterbrecher (16) zu steuern, um die Steuersignalleitung (6) zu unterbrechen, **dadurch gekennzeichnet, dass** sie einen Signaleingang (21) für ein Messsignal (U1) eines Bremsdrucks aufweist, der in der Bremsdruckleitung (8) an einem ersten Anschluss (22) des Gleitschutzventils (7) anliegt, und einen Signaleingang (25) für ein Messsignal (U2) des Bremszylinderdrucks, der zwischen einem dem ersten Anschluss (22) gegenüberliegenden zweiten Anschluss (23) des Gleitschutzventils (7) und einem Bremszylinder (18) anliegt, wobei die Sicherheitssteuerung (13) zur Auswertung der Steuersignale eingerichtet ist, ein Messsignal (U1) für anliegenden Bremsdruck in Verbindung mit einem Messsignal (U2) für eine kritische Druckabweichung zwischen dem zweiten Anschluss (23) des Gleitschutzventils (7) und dem Bremszylinder (18) für länger als eine vorbestimmte Zeit als nicht vorgesehenes Steuersignal zu erkennen.

2. Sicherheitssteuerung (13) nach Anspruch 1, **dadurch gekennzeichnet, dass** sie einen Eingang für ein Steuersignal eines Steuerventils (9) für den Bremsdruck aufweist und zur Auswertung der Steuersignale eingerichtet ist, so dass sie ein Steuersignal für anliegenden Bremsdruck in Verbindung mit einem länger als vorbestimmt andauernden Steuersignal für eine Stellung des Gleitschutzventils (7), in der Bremsdruck abgelassen wird und/oder die Bremsdruckleitung (8) abgesperrt wird, als nicht vorgesehenes Steuersignal erkennt.

3. Sicherheitssteuerung (13) nach einem der voranstehenden Ansprüche, **dadurch gekennzeichnet, dass** ein Bremsdruck der von einem Steuerventil (9) für den Bremsdruck auf die Bremsdruckleitung (8) gegebene Druck ist.

4. Sicherheitssteuerung (13) nach einem der voranstehenden Ansprüche, **dadurch gekennzeichnet, dass** das Gleitschutzventil (7) eingerichtet ist, bei Stromlosigkeit durch Unterbrechung der Steuersignalleitung (6) eine Ventilstellung einzunehmen, in der die Bremsdruckleitung (8) zum Bremszylinder (18) durchgängig ist und ein Auslass (12) zum Ablassen des Bremsdrucks verschlossen ist.

5. Sicherheitssteuerung (13) nach einem der voranstehenden Ansprüche, **dadurch gekennzeichnet, dass** das Gleitschutzventil (7) in einem ersten Schaltzustand die Bremsdruckleitung (8) bis zum Bremszylinder (18) durchgängig macht und einen Auslass (12) verschließt und in einem zweiten Schaltzustand die Bremsdruckleitung (8) zum Bremszylinder (18) verschließt und den Bremszylinder (18) mit einem Auslass (12) verbindet.

6. Sicherheitssteuerung (13) nach einem der voranstehenden Ansprüche, **dadurch gekennzeichnet, dass** die Gleitschutzsteuerung (1) eingerichtet ist, bei anliegendem Bremsdruck in Abhängigkeit von der Umdrehungsgeschwindigkeit eines vom Bremszylinder (18) gebremsten Rads das Gleitschutzventil (7) zu steuern.

7. Sicherheitssteuerung (13) nach einem der voranstehenden Ansprüche, **dadurch gekennzeichnet, dass** sie in einem Gehäuse angeordnet ist, das als Steuersignaleingänge für Steuersignale einen Anschluss für eine Steuersignalleitung (6) aufweist, die an einer Gleitschutzsteuerung (1) angeschlossen ist, und das mit einem Gleitschutzventil (7) verbindbare Ausgänge für Steuersignale aufweist, wobei der zumindest eine Unterbrecher (16) in dem Gehäuse zwischen dem Anschluss für die Steuersignalleitung (6) und den Ausgängen angeordnet ist.

8. Sicherheitssteuerung (13) nach einem der Ansprüche 2 bis 7, **dadurch gekennzeichnet, dass** sie von einem Gehäuse eingefasst ist, das an einem Gehäuse befestigbar ist, das ein Gleitschutzventil (7) und einen Drucksensor (20) in der Bremsdruckleitung zur Erzeugung eines Messsignals (U1) des Bremsdrucks, der in der Bremsdruckleitung (8) an einem ersten Anschluss (22) des Gleitschutzventils (7) anliegt, enthält.

9. Sicherheitssteuerung (13) nach einem der Ansprüche 2 bis 8, **dadurch gekennzeichnet, dass** sie von einem Gehäuse eingefasst ist, das an einem Gehäuse befestigbar ist, das ein Gleitschutzventil (7) und einen Drucksensor (24) an dem dem ersten Anschluss (22) gegenüberliegenden zweiten Anschluss (23) des Gleitschutzventils (7) zur Erzeugung eines Messsignals (U2) des Bremszylinderdrucks aufweist.

10. Sicherheitssteuerung (13) nach einem der voranstehenden Ansprüche, **dadurch gekennzeichnet, dass** das Gleitschutzventil (7) ein in der Bremsdruckleitung (8) angeordnetes erstes Ventil (17) und ein zwischen dem erstem Ventil (17) und einem Bremszylinder (18) mit der Bremsdruckleitung (8) verbundenes zweites Ventil (19) enthält, das in einem ersten Schaltzustand die Bremsleitung (8) abdichtet und in einem zweiten Schaltzustand den Bremszylinder (18) mit dem Auslass (12) verbindet.

11. Sicherheitssteuerung (13) nach einem der voranstehenden Ansprüche, **dadurch gekennzeichnet, dass** sie in einem Gehäuse angeordnet ist, das als Steuersignaleingänge einen Anschluss für die Steuersignalleitung (6) aufweist, die mit der Gleitschutzsteuerung (1) verbunden ist, und Ausgänge, die mit dem Gleitschutzventil (7) zu verbinden sind, so dass die Sicherheitssteuerung (13) in dem Gehäuse zwischen die Steuersignalleitung (6) und das Gleitschutzventil (7) geschaltet werden kann und das Gehäuse einen Eingang für ein Messsignal des Bremsdrucks und einen Eingang für ein Messsignal des Bremszylinderdrucks aufweist.

12. Verfahren zur Sicherung der Funktion einer gesteuerten Druckluftbremse für Schienenfahrzeuge, bei dem eine Gleitschutzsteuerung (1) bei anliegendem Bremsdruck in Abhängigkeit von der Umdrehungsgeschwindigkeit eines vom Bremszylinder (18) gebremsten Rads ein Gleitschutzventil (7) mit Steuersignalen steuert, die durch eine Steuersignalleitung an das Gleitschutzventil (7) übermittelt werden, **gekennzeichnet durch** das Unterbrechen der Steuersignalleitung (6) durch eine Sicherheitssteuerung (13) nach einem der voranstehenden Ansprüche.

## Claims

1. Safety control system (13) for a controlled compressed air break, especially for rail vehicles, having control signal inputs for control signals, which are conducted through a control signal line (6) from an anti-skid protection control (1) to an anti-skid protection valve (7) which is arranged in the brake pressure line (8), and having at least one interruptor (16), arranged on a control signal line (6), wherein the safety control system (13) is arranged to analyze the control signals and for unexpected control signals to control the interruptor (16) in order to interrupt the control signal line (6), **characterized in that** it has a signal input (21) for a measuring signal (U1) of a break pressure, which is present in the break pressure line (8) at a first connection (22) of the anti-skid protection valve (7), and a signal input (25) for a measuring signal (U2) of the break cylinder pressure which is present between a second connection (23) of the anti-skid protection valve (7) opposite the first connection (22), and a break cylinder (18), wherein the safety control system (13) is arranged for analyzing the control signals, to recognise as an unexpected control signal a measuring signal (U1) for break pressure present in connection with a measuring signal (U2) for a critical pressure deviation between the second connection (23) of the anti-skid protection valve (7) and the break cylinder (18) for longer than a predetermined time.

2. Safety control system (13) according to claim 1, **characterized in that** it has an input for a control signal of a control valve (9) for the brake pressure and is arranged for analyzing the control signals so that it recognises as an unexpected control signal a control signal for the brake pressure present in connection with a control signal continuing for longer than predetermined for a position of the anti-skid protection valve (7), in which the brake pressure is released and/or the brake pressure line (8) is closed.

3. Safety control system (13) according to one of the preceding claims, **characterized in that** a brake pressure is the pressure given by a control valve (9) for the brake pressure onto the brake pressure line (8).

4. Safety control system (13) according to one of the preceding claims, **characterized in that** the anti-skid protection valve (7) is arranged to take a valve position, in which the brake pressure line (8) towards the brake cylinder (18) is open and an outlet (12) for releasing the brake pressure is closed upon absence of current by interruption of the control signal line (6).

5. Safety control system (13) according to one of the preceding claims, **characterized in that** the anti-skid protection valve (7) in a first switching condition opens the brake pressure line (8) towards the brake cylinder (18) and closes an outlet (12) and in a second switching condition closes the brake pressure line (8) towards the brake cylinder (18) and connects the brake cylinder (18) to an outlet (12).

6. Safety control system (13) according to one of the preceding claims, **characterized in that** the anti-skid protection control (1) is arranged to control the anti-skid protection valve (7) in the presence of brake pressure in dependence on the rotational speed of a wheel that is braked by the brake cylinder (18).

7. Safety control system (13) according to one of the preceding claims, **characterized in that** it is arranged in a housing, which as an input for signal inputs for control signals has a connection for a control signal line (6) which is connected to an anti-skid protection control (1), and which has outputs for control signals connectable to an anti-skid protection valve (7), wherein the at least one interruptor (16) within the housing is arranged between the connection for the control signal line (6) and the outlets.

8. Safety control system (13) according to one of claims 2 to 7, **characterized in that** it is enclosed by a housing that is connectable to a housing, which contains an anti-skid protection valve (7) and a pressure sensor (20) within the brake pressure line for generating a measuring signal (U1) of the brake pressure which is present in the brake pressure line (8) at a first connection (20) of the anti-skid protection valve (7).

9. Safety control system (13) according to one of claims 2 to 8, **characterized in that** it is enclosed by a housing that is connectable to a housing which has an anti-skid protection valve (7) and a pressure sensor (24) on the second connection (23) of the anti-skid protection valve (7) opposite the first connection (24) for generating a measuring signal (U2) of the brake cylinder pressure.

10. Safety control system (13) according to one of the preceding claims, **characterized in that** the anti-skid protection valve (7) comprises a first valve (17) arranged in the brake pressure line (8) and a second valve (19) connected to the brake pressure line (8) between the first valve (17) and a brake cylinder (18), the second valve (19) in a first switching condition sealing the brake line (8) and in a second switching condition connecting the brake cylinder (18) to the outlet (12).

11. Safety control system (13) according to one of the preceding claims, **characterized in that** it is arranged within a housing which as control signal inputs has a connection for the control signal line (6) which is connected to the anti-skid protection control (1), and outlets connectable to the anti-skid protection valve (7), so that the safety control system (13) within the housing can be connected between the control signal line (6) and the anti-skid protection valve (7) and the housing has an input for a measuring signal of the brake pressure and an input for a measuring signal for the brake cylinder pressure.

12. Process for ensuring the function of a controlled compressed air brake for rail vehicles, in which an anti-skid protection control (1) in the presence of brake pressure in dependence on the rotational speed of a wheel braked by a brake cylinder (18) controls an anti-skid protection valve (7) by way of control signals, which are transmitted through a control signal line to the anti-skid protection valve (7), **characterized by** the interruption of the control signal line (6) by a safety control system (13) according to one of the preceding claims.

## Revendications

1. Contrôleur de sécurité (13) pour frein pneumatique à commande, en particulier pour véhicules ferroviaires, comprenant des entrées de signal de commande, fournies par le biais d'une ligne de signal de commande (6) à partir d'un contrôleur antipatinage (1) jusqu'à une valve antipatinage (7) disposée dans un conduit de pression de freinage (8), et au moins un coupe-circuit (16), prévu sur la ligne de signal de commande (6), dans lequel le contrôleur de sécurité (13) est agencé pour évaluer les signaux de commande et pour actionner le coupe-circuit (16) en présence de signaux de commande imprévus, pour interrompre la ligne de signal de commande (6), **caractérisé en ce qu'**il présente une entrée de signal (21) pour signal de mesure (U1) d'une pression de freinage, entrée de signal située dans le conduit de pression de freinage (8) au niveau d'une première connexion (22) de la valve antipatinage (7), et une entrée de signal (25) pour un signal de mesure (U2) de la pression de vérin de freinage, entrée de signal située entre la seconde connexion (23) de la valve antipatinage (7), faisant face à la première connexion (22), et un vérin de freinage (18), dans lequel le contrôleur de sécurité (13) est agencé pour interpréter les signaux de commande et pour détecter un signal de mesure (U1) pour la pression de freinage appliquée en liaison avec un signal de mesure concernant un écart de pression critique entre la seconde connexion (23) de la valve antipatinage (7) et le vérin de freinage (18), correspondant à un signal de commande imprévu et d'une durée plus longue que prévue.

2. Contrôleur de sécurité (13) selon la revendication 1, **caractérisé en ce qu'**il présente une entrée pour un signal de commande d'une valve de commande (9) pour la pression de freinage et qu'il est agencé pour interpréter les signaux de commande, de sorte qu'il peut reconnaître comme signal de commande imprévu tout signal de commande correspondant à une pression de freinage appliquée en liaison avec un signal de commande d'une durée plus longue que prévue dans une position donnée de la valve antipatinage (7), position dans laquelle la pression de freinage baisse et/ou le conduit de pression de freinage (8) est bloqué.

3. Contrôleur de sécurité (13) selon l'une des revendications précédentes, **caractérisé en ce qu'**une pression de freinage correspond à la pression donnée par une valve de commande (9) pour la pression de freinage appliquée au conduit de pression de freinage (8).

4. Contrôleur de sécurité (13) selon l'une des revendications précédentes, **caractérisé en ce que** la valve antipatinage (7) est agencée pour adopter une certaine position de valve en cas d'absence de courant due à une interruption sur la ligne de signal de commande (6), position dans laquelle le conduit de pression de freinage (8) allant jusqu'au vérin de freinage (18) est conducteur et la sortie (12) permettant la purge de la pression de freinage est fermée.

5. Contrôleur de sécurité (13) selon l'une des revendications précédentes, **caractérisé en ce que**, dans un premier mode de commutation, la valve antipatinage (7) rend conducteur le conduit de pression de freinage (8) allant jusqu'au vérin de freinage (18), et referme une sortie (12), et dans un second mode de commutation, referme le conduit de pression de freinage (8) allant jusqu'au vérin de freinage (18) et relie le vérin de freinage (18) à une sortie (12).

6. Contrôleur de sécurité (13) selon l'une des revendications précédentes, **caractérisé en ce que** le contrôleur antipatinage (1) est agencé pour commander la valve antipatinage (7) lorsqu'une pression de freinage est appliquée en fonction de la vitesse de rotation d'une roue freinée par le vérin de freinage (18).

7. Contrôleur de sécurité (13) selon l'une des revendications précédentes, **caractérisé en ce qu'**il est agencé dans un logement présentant une connexion pour ligne de signal de commande (6) fournissant des entrées de signal de commande pour les signaux de commande, laquelle ligne est connectée à un contrôleur antipatinage (1), et présentant des sorties pour signaux de commande, sortie pouvant être connectées à une valve antipatinage (7), dans lequel ledit au moins un coupe-circuit (16) est prévu dans le logement entre la connexion pour la ligne de signal de commande (6) et les sorties.

8. Contrôleur de sécurité (13) selon l'une des revendications 2 à 7, **caractérisé en ce qu'**il est placé dans un logement pouvant être fixé sur un logement qui contient une valve antipatinage (7) et un capteur de pression (20) dans le conduit de pression de freinage pour générer un signal de mesure (U1) de la pression de freinage appliquée dans le conduit de pression de freinage (8) au niveau d'une première connexion (22) de la valve antipatinage (7).

9. Contrôleur de sécurité (13) selon l'une des revendications 2 à 8, **caractérisé en ce qu'**il est placé dans un logement pouvant être fixé sur un logement qui présente une valve antipatinage (7) et un capteur de pression (24) au niveau de la seconde connexion (23) de la valve antipatinage (7) pour générer un signal de mesure (U2) de la pression de vérin de freinage, la seconde connexion faisant face à la première connexion (22).

10. Contrôleur de sécurité (13) selon l'une des revendications précédentes, **caractérisé en ce que** la valve antipatinage (7) contient une première valve (17) situé dans le conduit de pression de freinage (8) et une seconde valve (19) reliée au conduit de pression de freinage (8) entre la première valve (17) et un vérin de freinage (18), valve antipatinage assurant l'étanchéité du conduit de freinage (8) dans un premier mode de commutation et reliant le vérin de freinage (18) avec la sortie (12) dans un seconde mode de commutation.

11. Contrôleur de sécurité (13) selon l'une des revendications précédentes, **caractérisé en ce qu'**il est agencé dans un logement présente une connexion pour ligne de signal de commande (6) fournissant des entrées de signal de commande, ligne reliée à contrôleur antipatinage (1), et des sorties reliées à la valve antipatinage (7), de sorte que le contrôleur de sécurité (13) peut être commuté dans le logement entre la ligne de signal de commande (6) et la valve antipatinage (7) et que le logement présente une entrée pour un signal de mesure de la pression de freinage et une entrée pour un signal de mesure de la pression de vérin de freinage.

12. Procédé de sécurisation du fonctionnement d'un frein pneumatique à commande pour véhicules ferroviaires, dans lequel un contrôleur antipatinage (1) commande une valve antipatinage (7) avec des signaux de commande, lorsqu'une pression de freinage est appliquée en fonction de la vitesse de rotation d'une roue freinée par le vérin de freinage (18), signaux de commande transmis à la valve antipatinage (7) par le biais d'une ligne de signal de commande, **caractérisé par** une interruption de la ligne de signal de commande (6) provoquée par un contrôleur de sécurité (13) selon l'une des revendications précédentes.
